# EUROPÄISCHE PATENTSCHRIFT

(11) **EP 2 767 738 B1**
(45) Veröffentlichungstag und Bekanntmachung des Hinweises auf die Patenterteilung: **17.07.2019**
(21) Anmeldenummer: 13155718.3
(22) Anmeldetag: 19.02.2013
(51) Int. Cl.: F16H 61/462

(54) **Hydraulische Steueranordnung, Getriebe damit und Verfahren zur Vorbefüllung**
Hydraulic control assembly, transmission with same and method for pre-filling
Agencement de commande hydraulique, engrenage doté de celui-ci et procédé de pré-remplissage

(43) Veröffentlichungstag der Anmeldung: 20.08.2014
(73) Patentinhaber: Dana Rexroth Transmission Systems S.r.l., 38062 Arco (Trento) (IT)
(72) Erfinder: Mutschler, Steffen, 38062 Arco (IT); Moeller, Dennis, 38066 Riva del Garda (TN) (IT); Profumo, Giovanni, 38066 Riva del Garda (IT)
(74) Vertreter: Maiß, Harald

(56) Entgegenhaltungen:
- EP-A2- 0 721 074
- DE-A1- 19 846 955
- DE-A1-102007 037 107
- DE-A1-102007 037 664
- JP-A- H08 135 780
- JP-A- H10 141 488
- US-A- 3 618 728
- US-A- 3 741 360

## Beschreibung

Die Erfindung betrifft eine hydrostatische Steueranordnung gemäß dem Oberbegriff des Patentanspruchs 1, ein Getriebe gemäß dem Patentanspruch 7 und ein Verfahren gemäß dem Patentanspruch 8.

Leistungsverzweigte Getriebe weisen neben einem mechanischen Leistungszweig, der mit einer festen oder mit einer variablen Übersetzung betreibbar ist, einen weiteren Leistungszweig auf. Letztgenannter ist als hydraulischer Getriebezweig mit einer Hydropumpe und einem Hydromotor ausgebildet, die in einem geschlossenen Kreis betrieben werden. Wenigstens eine dieser beiden Maschinen ist dabei verstellbar ausgebildet, so dass über den hydraulischen Leistungs- beziehungsweise Getriebezweig das gesamte Übersetzungsverhältnis des leistungsverzweigten Getriebes stufenlos variierbar ist. Beide Leistungszweige werden dabei über einen Summierabschnitt des Getriebes zusammengeführt und wirken so auf eine gemeinsame Ausgangswelle des Getriebes. Weiterhin kann das Getriebe einen zusätzlichen Schaltgetriebeabschnitt aufweisen, über den ein Übersetzungsverhältnis des Getriebes über das der beiden Leistungszweige hinaus erweiterbar ist. Zur Verbindung der einzelnen oder beider Leistungszweige mit dem Summierabschnitt oder zu deren Trennung vom Summierabschnitt und zur Schaltung der Getriebestufen weist das Getriebe Kupplungen auf.

Bekannte, leistungsverzweigte Getriebe zeigen beispielsweise die Offenlegungsschriften DE 10 2007 037 107 A1 und DE 10 2007 037 664 A1.

Zur Betätigung der Kupplungen ist dabei eine hydraulische Steueranordnung vorzusehen, die es ermöglicht, einzelne oder mehrere der Kupplungen gleichzeitig zu betätigen. Dabei ist unterschiedlichen Fahrbereichen des Getriebes, die unterschiedlichen Intervallen von Übersetzungsverhältnissen entsprechen, wenigstens eine geschlossene beziehungsweise eingekuppelte Kupplung zugeordnet. In Abhängigkeit des Anwendungsgebietes des Getriebes ist somit eine Matrix geschlossener und geöffneter Kupplungen in Abhängigkeit der Fahrbereiche des Getriebes vorgesehen.

Bekannte hydraulische Steueranordnungen weisen für jede der Kupplungen eine hydraulische Stellvorrichtung auf, die an einer Arbeitsleitung angeschlossen ist, die zur Betätigung der Stellvorrichtung mit einer Druckmittelquelle und ansonsten mit einer Druckmittelsenke verbindbar ist. Ist die Stellvorrichtung längere Zeit unbetätigt, so ergibt es sich, dass in die Arbeitsleitung oder die Stellvorrichtung Luft eindringt, was bei erneuter Betätigung der Stellvorrichtung zu einem undefinierten Schaltzeitpunkt und Schaltkraftverlauf führt, da das Druckmittel, oder besser das Druckmittelgasgemisch, kompressibel ist.

Um dies zu vermeiden, sind aus dem Stand der Technik Entlüftungslösungen bekannt, die schwerkraftbasiert sind.

Nachteilig an diesen Lösungen ist, dass ein Wegeventil, über das die Stellvorrichtung mit der Druckmittelquelle versorgbar ist, entgegen der Schwerkraftrichtung oberhalb der Stellvorrichtung angeordnet sein muss. Dies stellt eine einzuhaltende geometrische Randbedingung dar, die die Ausnutzung zur Verfügung stehenden Bauraumes erschwert und in der Regel auch viel Bauraum benötigt. Weiterhin ist an den bekannten Lösungen nachteilig, dass bei geöffneter Kupplung ein zusätzlicher Leckagestrom von der Arbeitsleitung über die Stellvorrichtung zum Tank oder Sumpf vorliegt. Dieser Leckagestrom muss ersetzt werden, was einen zusätzlichen Energieverlust darstellt.

Die gattungsgemäße Druckschrift JPH10141488(A) zeigt eine hydraulische Steueranordnung, bei der eine Vorbefüllung eines Bremszylinders aus einer Arbeitsleitung heraus erfolgen kann, über die eine Kupplung der Steueranordnung mit Druckmittel beaufschlagbar ist. Das Überströmen von der Arbeitsleitung der Kupplung zur Arbeitsleitung der Bremse erfolgt über eine feste Drossel und einen ersten Eingang eines mit der Drossel in Reihe geschalteten Wechselventils. An dessen Ausgang ist der Bremszylinder angeschlossen, wobei ein zweiter Eingang des Wechselventils über ein elektromagnetisch betätigbares Ventil mit einer Druckmittelquelle verbindbar ist.

Dem gegenüber liegt der Erfindung die Aufgabe zu Grunde, eine hydraulische Steueranordnung mit zuverlässigerer Vorbefüllung und ein Getriebe damit zu schaffen. Weiterhin liegt der Erfindung die Aufgabe zu Grunde, ein Verfahren zur Betätigung der Stellvorrichtungen der Steueranordnung zu schaffen, mit dem eine höhere Schaltqualität erzielbar ist.

Die ersten beiden Aufgaben werden gelöst durch eine hydraulische Steueranordnung mit den Merkmalen des Patentanspruchs 1 und ein Getriebe mit den Merkmalen des Patentanspruchs 7. Die letzte Aufgabe wird gelöst durch ein Verfahren mit den Merkmalen des Patentanspruchs 8.

Vorteilhafte Weiterbildungen der Erfindung sind in den abhängigen Patentansprüchen beschrieben.

Eine derartige hydraulische Steueranordnung dient der Betätigung von Kupplungen beziehungsweise Synchronisationseinrichtungen eines leistungsverzweigten Getriebes. Die Betätigung erfolgt dabei in Abhängigkeit von Fahrbereichen des Getriebes oder zur Ausbildung dieser Fahrbereiche. Zu diesem Zweck weist die Steueranordnung für die Kupplungen jeweils eine mit einer Druckmittelsenke fluidisch verbindbare, hydraulische Stellvorrichtung auf. Dabei ist eine erste der Stellvorrichtungen über eine erste Arbeitsleitung und eine zweite der Stellvorrichtungen über eine zweite Arbeitsleitung, jeweils zur schließenden oder öffnenden Betätigung der ihr zugeordneten Kupplung, mit einer Druckmittelquelle verbindbar. Erfindungsgemäß weist die Steueranordnung eine Ventilanordnung auf, über die die erste mit der zweiten Arbeitsleitung in eine gedrosselte Druckmittelverbindung bringbar ist.

Besteht eine Druckdifferenz zwischen den beiden Arbeitsleitungen, was beispielsweise dann gegeben ist, wenn die zweite Arbeitsleitung mit der Druckmittelquelle und die erste Arbeitsleitung mit der Druckmittelsenke verbunden ist, so kann sich in Abhängigkeit der Ventilanordnung ein gedrosselter Druckmittelbeziehungsweise Vorfüllvolumenstrom von der zweiten hin zur ersten Arbeitsleitung einstellen.

Über die erfindungsgemäße Ventilanordnung kann die erste Arbeitsleitung und die damit verbundene Stellvorrichtung zuverlässig, auf vorrichtungstechnisch einfache Weise und im Vergleich zum Stand der Technik im Wesentlichen schwerkraftunabhängig, aus der zweiten Arbeitsleitung heraus vorbefüllt werden. Die erfindungsgemäße Vorbefüllung ist zuverlässiger als die herkömmliche, schwerkraftgetriebene, da sie unabhängig von einer räumlichen Anordnung der Steueranordnung ist. Hieraus resultiert für die Steueranordnung eine zusätzliche Freiheit für deren räumlicher Anordnung, wodurch die Steueranordnung bauraumsparend angeordnet und / oder ausgestaltet werden kann.

Unter Vorbefüllung ist dabei eine Beschickung der ersten Arbeitsleitung mit Druckmittel zu verstehen, so dass diese und die verbundene erste Stellvorrichtung entlüftet werden können und / oder sich in ihnen ein Vorfülldruck einstellen kann, der vorzugsweise unterhalb eines Betätigungsdrucks der ersten Stellvorrichtung liegt. Da in entlüftetem Zustand das Druckmittel im Rahmen seiner Spezifikation quasi inkompressibel ist, kann die erste Stellvorrichtung aus dem vorbefüllten Zustand heraus mit definierter Betätigungszeit und -kraft betätig werden. Dies macht ihre Betätigung - und damit auch die Betätigung der ihr zugeordneten Kupplung - präzise und reproduzierbar, so dass ein Übergang zwischen Fahrbereichen, der eine Betätigung der ersten Stellvorrichtung erfordert, definiert und reproduzierbar erfolgen kann.

Weisen beide Arbeitsleitungen etwa den gleichen Druck auf, was beispielsweise der Fall ist, wenn beide mit der Druckmittelquelle oder mit der Druckmittelsenke verbunden sind, so stellt sich vorzugsweise keine Vorbefüllung ein.

Die Bedeutung des Begriffs der Arbeitsleitung oder Druckmittelleitung ist in dieser Druckschrift nicht auf das herkömmliche Verständnis von Leitung beschränkt, sondern repräsentiert sinngemäß auch einen Arbeitskanal oder einen Druckmittelkanal.

Die Ventilanordnung ist in einer vorrichtungstechnisch einfachen Variante derart ausgestaltet, dass sie die Druckmittelverbindung lediglich in einer Richtung, beispielsweise von der zweiten zur ersten Arbeitsleitung, oder umgekehrt freigeben kann. In einer dazu alternativen Variante ist sie derart ausgestaltet, dass sie die Druckmittelverbindung in beiden Richtungen freigeben kann.

Ein Fahrbereich ist vorzugsweise über ein Intervall eines Übersetzungsverhältnisses einer Abtriebsdrehzahl zu einer Antriebsdrehzahl des Getriebes definierbar. In dem Fahrbereich können genau ein Leistungszweig oder mehrere Leistungszweige des Getriebes zur Abtriebsleistung beitragen. Im erstgenannten Fall wird der Fahrbereich als unverzweigt, im letztgenannten Fall als leistungsverzweigt bezeichnet. Intervalle können sich überschneiden oder können voneinander getrennt sein. Die einem Fahrbereich zugeordnete Kupplung ist innerhalb des Intervalls vorzugsweise geschlossen und trägt so zur Abtriebsleistung des Getriebes bei. Vorzugsweise wird die Kupplung durch die Betätigung der ihr zugeordneten Stellvorrichtung geschlossen. Alternativ dazu ist es aber auch denkbar, dass die Kupplung geschlossen ist und sie durch die Betätigung ihrer Stellvorrichtung gelöst wird.

Unter der Annahme, dass die Steueranordnung an das bereits erwähnte leistungsverzeigte Getriebe angeschlossen ist, sind über die erste und die zweite Stellvorrichtung eine erste und zweite Kupplung des Getriebes betätigbar. Vorzugsweise ist die erste Kupplung einem der Leistungszweige zugeordnet, der zumindest für einen langsamen Fahrbereich, beziehungsweise ein kleines Übersetzungsverhältnis des Getriebes vorgesehen ist. Dies ist vorzugsweise der hydraulische, erste Leistungszweig. Die zweite Kupplung ist vorzugsweise einem der Leistungszweige zugeordnet, der zumindest einem schnellen Fahrbereich, beziehungsweise einem großen Übersetzungsverhältnis des Getriebes zugeordnet ist. Dies ist vorzugsweise der mechanische, zweite Leistungszweig des Getriebes. Auf diese Weise sind wenigstens ein erster und ein zweiter unverzweigter und vorzugsweise zusätzlich ein dritter leistungsverzweigter Fahrbereich des Getriebes schaltbar.

In einer bevorzugten Weiterbildung weist wenigstens eine der Stellvorrichtungen - vorzugsweise alle - eine Leckagevorrichtung auf, über die sie fluidisch, insbesondere gedrosselt mit der Druckmittelsenke verbindbar, insbesondere verbunden ist. Die Leckagevorrichtung ermöglicht es, den Vorfüllvolumenstrom entlang einem Druckmittelströmungspfad von der Ventilanordnung präzise durch die Stellvorrichtung hin zur Druckmittelsenke auszubilden. Die Leckagevorrichtung ist vorzugsweise über einen Leckagespalt, insbesondere über eine Drossel oder Blende ausgebildet und ist bevorzugt fest, das heißt unverstellbar. Alternativ dazu kann sie verstellbar ausgebildet sein. Weiterhin weist die Leckagevorrichtung den Vorteil auf, die Stellvorrichtung bei Bedarf oder in bestimmten Fahrbereichen entleeren zu können. Die Leckagevorrichtung wird auch als Blutloch bezeichnet.

Eine vorrichtungstechnisch einfache, vorteilhafte Weiterbildung der Ventilanordnung weist eine mit der zweiten Arbeitsleitung fluidisch verbindbare, insbesondere verbundene Drosselvorrichtung und ein mit dieser fluidisch in Reihe geschaltetes, mit der ersten Arbeitsleitung fluidisch verbindbares, insbesondere verbundenes Rückschlagventil auf. Dieses ist in Öffnungsrichtung mit einem Druck zwischen der Drosselvorrichtung und dem Rückschlagventil beaufschlagbar, insbesondere beaufschlagt. Da das Rückschlagventil die fest vorgegebene Öffnungsrichtung hat, ist die vorbeschriebene Vorbefüllung bei dieser Weiterbildung nur in Richtung der ersten Arbeitsleitung ermöglicht. Ist beispielsweise die zweite Arbeitsleitung mit der Druckmittelquelle und die erste Arbeitsleitung mit der Druckmittelsenke verbunden, so stellt sich der Vorfüllvolumenstrom von der zweiten hin zur ersten Arbeitsleitung ein, sobald der Druck ausreicht, das Rückschlagventil zu öffnen. Dabei bewirkt die Drosselvorrichtung eine Begrenzung des Vorfüllvolumenstroms und über sie stellt sich ein Druckverlust ein. Bei umgekehrten Druckverhältnissen hingegen oder wenn beide Arbeitsleitungen etwa gleichen Druck aufweisen, sind die Arbeitsleitungen über das dann geschlossene Rückschlagventil fluidisch voneinander getrennt.

Vorzugsweise sind die Drosselvorrichtung und das Rückschlagventil in genannter Reihenschaltung in einer die beiden Arbeitsleitungen verbindenden Druckmittelleitung oder in einem entsprechenden Druckmittelkanal angeordnet.

Vorzugsweise ist die Drosselvorrichtung fest, das heißt mit konstanter Drosselgeometrie und somit vorrichtungstechnisch einfach ausgestaltet. Alternativ dazu kann sie verstellbar ausgestaltet sein. Die Drosselvorrichtung ist vorzugsweise als Drossel oder als Blende ausgestaltet sein.

Das vorbeschriebene Rückschlagventil erweist sich als besonders vorteilhaft, da über seine Schließkraft, über ein Druckäquivalent einer Schließfeder des Rückschlagventils, ein Druck beziehungsweise der Vorfülldruck in der ersten Arbeitsleitung auf vorrichtungstechnisch einfache Weise einstellbar ist. Dabei kann das Rückschlagventil mit unverstellbarer oder mit verstellbarer Schließkraft beziehungsweise Feder ausgebildet sein. Im verstellbaren Fall kann der Vorfülldruck im Rahmen eines Verstellbereichs eingestellt werden.

In einer vorteilhaften Weiterbildung weist die Ventilanordnung anstatt der Drosselvorrichtung und des Rückschlagventils, oder ergänzend zu den beiden, eine stetig, insbesondere proportional verstellbare Steuerdrossel auf, deren Öffnungsquerschnitt in Abhängigkeit eines Soll- und eines Istwertes des Vorfülldrucks der ersten und / oder zweiten Arbeitsleitung steuerbar ist. Der Vorteil der Steuerdrossel ist, dass über sie die erfindungsgemäße Vorbefüllung in beiden Richtungen, also für beide Arbeitsleitungen erfolgen kann, da die Steuerdrossel in beiden Richtungen durchströmbar ist.

In einer anderen bevorzugten Variante weist die Ventilanordnung zur Darstellung der gedrosselten Druckmittelverbindung ein Druckregelventil oder ein Druckreduzierventil auf, über das ein niedriger Ausgangsdruck, der vorzugsweise der Vorfülldruck der ersten Arbeitsleitung und Stellvorrichtung ist, einregelbar ist.

In einer vorteilhaften Weiterbildung weist die Steueranordnung für eine weitere der Kupplungen eine fluidisch mit der Druckmittelsenke verbindbare, dritte Stellvorrichtung auf, die über eine dritte Arbeitsleitung zur Betätigung der ihr zugeordneten Kupplung fluidisch mit der Druckmittelquelle verbindbar ist. Die dritte Stellvorrichtung erweitert die Steueranordnung somit um die Möglichkeit, eine dritte Kupplung des Getriebes zu betätigen und somit einen weiteren Fahrbereich des Getriebes bereitzustellen. Darauf aufbauende, bevorzugte Weiterbildungen weisen wenigstens eine weitere Stellvorrichtung gemäß der vorangegangenen Beschreibung auf, die für eine weitere, einem Fahrbereich zugeordnete Kupplung vorgesehen ist. Dabei ist die Anzahl der Stellvorrichtungen nicht auf vier begrenzt. So sind fünf, sechs oder mehr Stellvorrichtungen möglich um weitere Fahrbereiche abzubilden.

Mit reduziertem vorrichtungstechnischem Aufwand ist die Steueranordnung ausgebildet, wenn wenigstens eine der Stellvorrichtungen über die ihr zugeordnete Arbeitsleitung fluidisch nicht nur mit der Druckmittelquelle, sondern auch mit der Druckmittelsenke verbindbar ist. So kann von einer gesonderten, nur für die Verbindung mit der Druckmittelsenke geeignete Arbeitsleitung abgesehen werden.

Vorzugsweise ist wenigstens eine der Arbeitsleitungen mit einem Arbeitsanschluss eines ihr zugeordneten Wegeventils verbunden, das zudem einen mit der Druckmittelquelle verbindbaren, insbesondere verbundenen Hochdruckanschluss und einen mit der Druckmittelsenke verbindbaren, insbesondere verbundenen Niederdruckanschluss hat. Weiterhin hat es eine Versorgungsstellung, über die der Hochdruckanschluss mit dem Arbeitsanschluss verbindbar ist, und eine Entlastungsstellung, über die der Niederdruckanschluss mit dem Arbeitsanschluss verbindbar ist. Über das der entsprechenden Arbeitsleitung individuell zugeordnete Wegeventil kann die zugeordnete Stellvorrichtung in Abhängigkeit der Stellung entweder mit der Druckmittelquelle oder der Druckmittelsenke verbunden werden.

Vorzugsweise ist das Wegeventil als 3/2-Wege-Schaltventil oder als stetig verstellbares 3/2-Wegeventil ausgebildet. Das 3/2-Wegeventil ist vorzugsweise proportional verstellbar. Das Wegeventil kann elektromagnetisch oder hydraulisch betätigbar ausgestaltet sein.

Vorzugsweise ist wenigstens eine der Stellvorrichtungen über einen Hydrozylinder mit einem Arbeitsraum ausgebildet, wobei letztgenannter mit der Arbeitsleitung dieser Stellvorrichtung fluidisch verbindbar, insbesondere verbunden ist, und zumindest abschnittsweise von einem axial verschieblichen Kolben begrenzt ist. Dabei ist der Kolben für einen Anschluss oder eine Kopplung mit derjenigen Kupplung vorgesehen, die der Stellvorrichtung zugeordnet ist.

Zum Zwecke dieser Kopplung ist der Kolben im Hydrozylinder vorzugsweise um seine Längsachse rotierbar ausgebildet. Die vorbeschriebene Leckagevorrichtung ist bevorzugt fluidisch mit dem erwähnten Arbeitsraum verbunden.

In einer bevorzugten Weiterbildung weist die Steueranordnung als Druckmittelquelle eine konstant oder verstellbar ausgebildete Hydropumpe und als Druckmittelsenke einen Sumpf oder Tank auf.

Die Steueranordnung ist in einer bevorzugten Weiterbildung in einen Steuerblock, eine Steuerscheibe oder eine Ventilscheibe integriert, so dass sie besonders klein und kompakt baut, leicht austauschbar ist und robust gegen Schlag oder Beschädigung ist.

Ein leistungsverzweigtes Getriebe hat einen hydraulischen ersten Leistungszweig und einen mechanischen zweiten Leistungszweig und deckt mehrere Fahrbereiche ab. Weiterhin weist das Getriebe Kupplungen zur Schaltung der einzelnen Fahrbereiche auf. Zur Betätigung der Kupplungen hat das Getriebe eine hydraulische Steueranordnung, die gemäß der vorangegangenen Beschreibung ausgestaltet ist. Dabei ist die erste Stellvorrichtung der Steueranordnung mit einer ersten der Kupplungen gekoppelt, über die einer der beiden Leistungszweige, vorzugsweise der hydraulische erste Leistungszweig, mit einem Getriebeausgang, insbesondere einer Ausgangswelle koppelbar ist. Weiterhin ist die zweite Stellvorrichtung der Steueranordnung mit einer zweiten der Kupplungen gekoppelt, über die der andere der beiden Leistungszweige, vorzugsweise der mechanische zweite Leistungszweig, mit dem Getriebeausgang, insbesondere der Getriebeausgangswelle koppelbar ist.

Für das derart ausgestaltete Getriebe ergibt sich je nach Weiterbildung der Steueranordnung aufgrund der erfindungsgemäßen, vorbeschriebenen Vorbefüllung der bereits genannte Vorteil der definierten, reproduzierbaren Betätigung der Stellvorrichtung und damit der ihr zugeordneten Kupplung. Daher ist der Übergang zwischen Fahrbereichen, der die Betätigung der so vorbefüllten Stellvorrichtung erfordert, präzise steuerbar.

In einer bevorzugten Weiterbildung weist das Getriebe einen Summierabschnitt auf, über den Abtriebsleistungen der Leistungszweige summierbar und an den Getriebeausgang übertragbar sind.

Vorzugsweise ist der Getriebeausgang eine Getriebeausgangswelle.

Die bereits erwähnten weiteren Kupplungen sind vorzugsweise Kupplungen des mechanischen, zweiten Leistungszweigs oder eines Schaltgetriebeabschnitts, über die weitere unverzweigte oder leistungsverzweigte Fahrbereiche ausbildbar sind. Insbesondere sind sie jeweils einer Getriebestufe des Schaltgetriebeabschnitts zugeordnet.

Der Summierabschnitt ist vorzugsweise über ein Planetengetriebe ausgebildet.

Ein Verfahren zur Vorbefüllung der ersten Arbeitsleitung einer Steueranordnung, die gemäß der vorangegangenen Beschreibung ausgestaltet ist, und die insbesondere im bereits erwähnten Getriebe vorgesehen ist, weist erfindungsgemäß den Schritt "Gedrosseltes Verbinden der zweiten Arbeitsleitung mit der ersten Arbeitsleitung über die Ventilanordnung in Abhängigkeit eines der Fahrbereiche des Getriebes" auf, woraus sich die bereits besprochenen Vorteile für den präzisen Schaltzeitpunkt und den definierten Schaltkraftverlauf ergeben.

Für das Verfahren ergibt sich aufgrund der erfindungsgemäßen, vorbeschriebenen Vorbefüllung der bereits genannte Vorteil der definierten, präzisen und reproduzierbaren Betätigung der so vorgefüllten Stellvorrichtung und damit der ihr zugeordneten Kupplung.

Der Fahrbereich, in dessen Abhängigkeit die gedrosselte Verbindung erfolgt, ist vorzugsweise einer, in dem die erste Stellvorrichtung mit einem Niederdruck beaufschlagt, also unbetätigt und die zweite Stellvorrichtung betätigt ist.

Zur Ausführung des Verfahrens erweist sich besonders diejenige Weiterbildung der Steueranordnung als vorteilhaft, bei der die Ventilanordnung über das Rückschlagventil oder über das Druckregel- beziehungsweise Druckreduzierventil ausgebildet ist. Über derartige Ventile ist das Verfahren in rein hydromechanischer Weise, das heißt ohne die Notwendigkeit einer zur Verfahrensausführung vorgesehenen Steuereinrichtung in der Steueranordnung implementierbar.

Insbesondere bei großen Übersetzungsverhältnissen des Getriebes beziehungsweise Fahrgeschwindigkeiten des Fahrantriebes, aber auch in davon abweichenden Fahrzuständen, können die Stellvorrichtung und ihr mitrotierender Arbeitsraum hohe Drehzahlen aufweisen. Die dann im Arbeitsraum auf das Druckmittel einwirkenden Zentrifugalkräfte können beim Überschreiten eines Drehzahlgrenzwertes zu einem derart hohen Druckanstieg im Arbeitsraum führen, dass ein Betätigungsdruck der Stellvorrichtung überschritten wird und es zu deren ungewollter Selbstbetätigung kommt. Um dies auszuschließen, weist eine bevorzugte Weiterbildung des Verfahrens einen Schritt "Druckmittelentleerung des Arbeitsraumes zumindest einer der unbetätigten Stellvorrichtungen" auf. Vorzugsweise wird dieser Schritt in Abhängigkeit eines Fahrbereichs ausgeführt, der ein Übersetzungsverhältnis oder eine Fahrgeschwindigkeit aufweist, bei dem oder bei der der Drehzahlgrenzwert erreicht wird.

Letztgenannte Weiterbildung des Verfahrens ist vorzugsweise in einer programmierbaren Steuereinrichtung, insbesondere in einem Steuergerät der Steueranordnung oder des Getriebes, zur Ausführung gespeichert. Über die Steuereinrichtung ist dann eine zur Druckmittelentleerung geeignet ausgestaltete Ventilvorrichtung des Getriebes ansteuerbar. Die Steuereinrichtung weist vorzugsweise zur Speicherung des Verfahrens eine Speichereinheit und zur Ausführung eine Prozessoreinheit auf.

Im Folgenden werden zwei Ausführungsbeispiele eines erfindungsgemäßen Getriebes mit zugeordneten erfindungsgemäßen Steueranordnungen und erfindungsgemäßem Verfahren anhand von vier hydraulischen Schaltplänen und zwei Schaltmatrizen näher erläutert. Es zeigen:
Figur 1 ein erstes Ausführungsbeispiel eines leistungsverzweigten Getriebes
Figur 2 eine Steueranordnung des Getriebes gemäß Figur 1 mit zugehöriger Schaltmatrix Figur 3 ein zweites Ausführungsbeispiel eines leistungsverzweigten Getriebes und
Figur 4 eine hydraulische Steueranordnung des Getriebes gemäß Figur 3 mit zugehöriger Schaltmatrix
Figur 5 ein drittes Ausführungsbeispiel eines leistungsverzweigten Getriebes und
Figur 6 eine hydraulische Steueranordnung des Getriebes gemäß Figur 5 mit zugehöriger Schaltmatrix

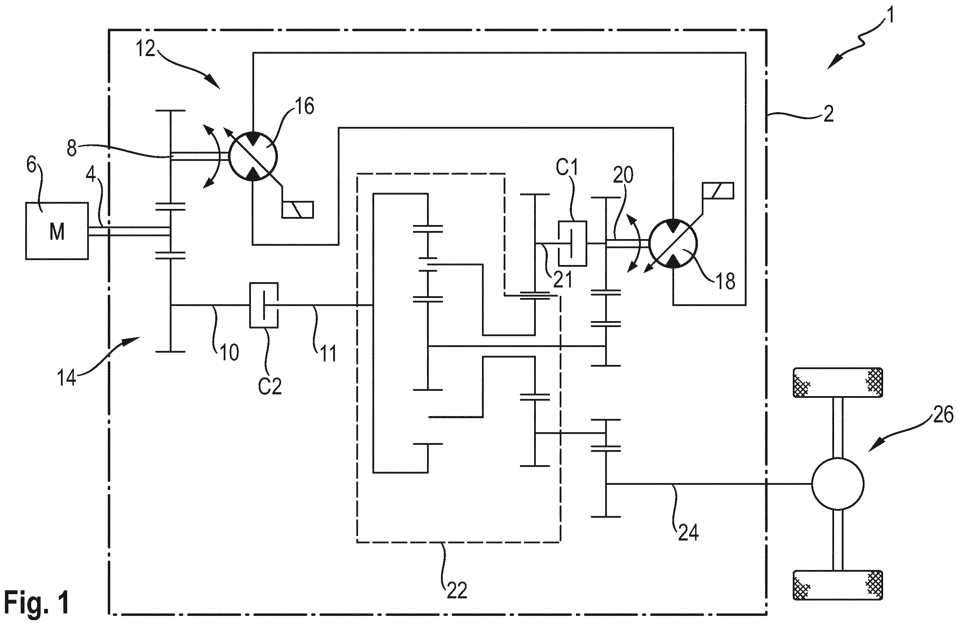

In den Figuren 1, 3 und 5 wird jeweils ein Überblick zur Ausgestaltung und Funktionsweise der Getriebe gegeben, der zum Verständnis der jeweiligen Steueranordnung notwendig ist. Auf eine Darstellung der Steueranordnung wird in diesen Figuren aus Gründen der Übersichtlichkeit verzichtet. Für eine eingehende Beschreibung der Ausgestaltung und Funktionsweise der Getriebe und zum Zwecke der Offenbarung der Ausgestaltung und Funktionsweise des jeweiligen Getriebes wird für das erste Ausführungsbeispiel auf die Offenlegungsschriften DE 10 2007 037 107 A1 und DE 10 2007 037 664 A1, für das zweite Ausführungsbeispiel auf die Offenlegungsschrift DE 10 2007 037 664 A1 und für das dritte Ausführungsbeispiel auf die Offenlegungsschrift DE 10 2009 031 382 A1 verwiesen.

Gemäß Figur 1 ist ein leistungsverzweigtes Getriebe 2 in einem Fahrantrieb 1 eines Fahrzeugs beispielsweise eines Frontladers oder Baggers vorgesehen. Das Getriebe 2 hat eine Eingangswelle 4, die mit einer Antriebsmaschine beziehungsweise einem Antriebsmotor 6 verbunden ist. Über eine jeweilige Zahnradpaarung ist die Eingangswelle 4 mit einer jeweiligen Eingangswelle 8, 10 verbunden. Dabei ist die Eingangswelle 8 einem hydraulischen, ersten Leistungszweig 12 und die Eingangswelle 10 einem mechanischen, zweiten Leistungszweig 14 zugeordnet. Der hydraulische Leistungszweig 12 weist eine verstellbar ausgeführte Hydropumpe 16 und einen verstellbar ausgeführten Hydromotor 18 auf, die in einem geschlossenen Kreis betrieben werden. Die Hydropumpe 16 wird dabei über die Eingangswelle 8 angetrieben. Der Hydromotor 18 hat eine Ausgangswelle 20. Diese kann über eine erste Kupplung C1 mit einem Summierabschnitt 22 des Getriebes 2 verbunden werden. Der Summierabschnitt 22 ist dabei als Planetengetriebe ausgebildet.

Die Eingangswelle 10 des mechanischen Leistungszweigs 14 kann über eine zweite Kupplung C2 mit dem Summierabschnitt 22 verbunden werden. Ein Ausgang des Summierabschnitts 22 ist mit einer Ausgangswelle 24 des Getriebes 2 verbunden, die eine Achseinheit 26 des Fahrantriebs 1 antreibt.

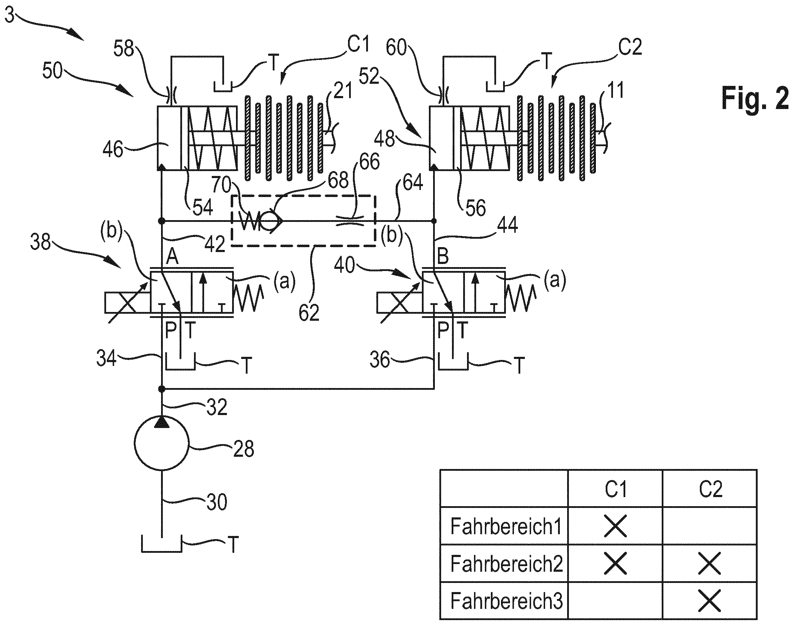

In einem ersten Fahrbereich des Getriebes 2 erfolgt eine Leistungsübertragung von der Antriebsmaschine 6 hin zur Ausgangswelle 24 lediglich über den hydraulischen, ersten Leistungszweig 12. Hierzu ist die erste Kupplung C1 geschlossen und die zweite Kupplung C2 geöffnet. In einem zweiten, leistungsverzweigten Fahrbereich erfolgt die Leistungsübertragung über beide Leistungszweige 12, 14, wobei beide Kupplungen C1, C2 geschlossen sind. In einem dritten Fahrbereich erfolgt die Leistungsübertragung ausschließlich über die Kupplung C2, beziehungsweise den mechanischen, zweiten Leistungszweig 14. Diesen Zusammenhang zeigt eine Schaltmatrix gemäß Figur 2.

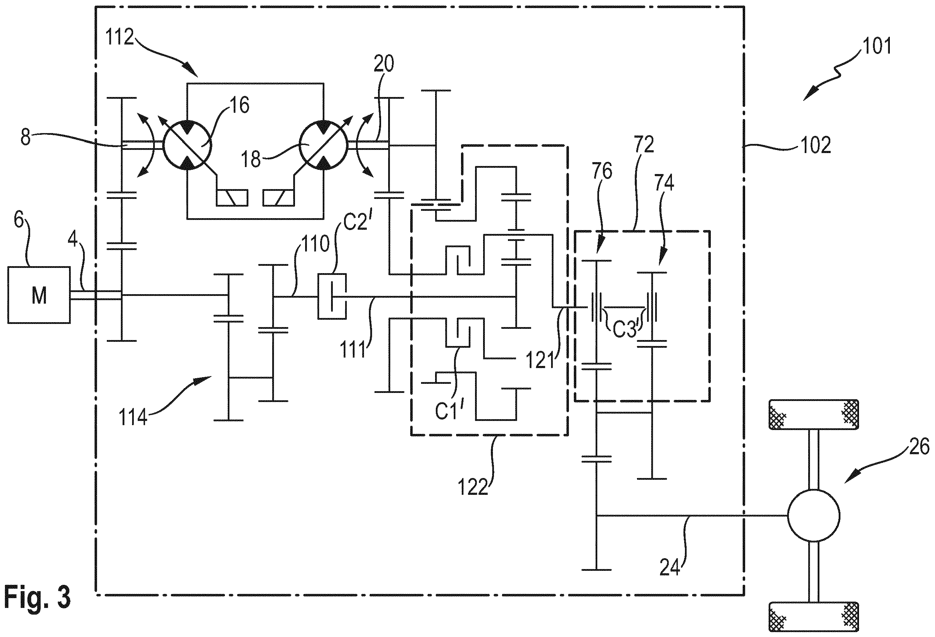

Figur 2 zeigt eine Steueranordnung 3 und ein mögliches Schaltschema beziehungsweise eine Schaltmatrix des zweiten Ausführungsbeispiels gemäß Figur 3. Die Steueranordnung 3 weist eine konstant ausgeführte Hydropumpe 28, die über eine Niederdruckleitung 30 mit einem Tank T verbunden ist, auf. Die Hydropumpe 28 hat einen Hochdruckanschluss, der an eine Hochdruckleitung 32 angeschossen ist, die sich in zwei Zulaufleitungen 34, 36 verzweigt. Jede der Zulaufleitungen 34, 36 ist dabei an einen Hochdruckanschluss P eines elektromagnetisch betätigbaren, stetig verstellbaren 3/2-Wegeventils 38, 40 angeschlossen. Das Wegeventil 38, 40 hat zudem einen Tankanschluss T, der mit dem Tank T verbunden ist. Weiterhin hat das Wegeventil 38, 40 einen Arbeitsanschluss A beziehungsweise B.

Der Arbeitsanschluss A des ersten Wegeventils 38 ist über eine erste Arbeitsleitung 42 mit einem Arbeitsraum 46 einer ersten Stellvorrichtung 50 verbunden, der Arbeitsanschluss B des zweiten Wegeventils 40 ist über eine zweite Arbeitsleitung 44 mit einem Arbeitsraum 48 einer zweiten Stellvorrichtung 52 verbunden. Die Stellvorrichtungen 50, 52 sind dabei als Hydrozylinder mit einem axial verschieblichen, um seine Längsachse rotierbaren Kolben 54, 56 ausgeführt. Jeder Arbeitsraum 46, 48 ist über eine Leckagevorrichtung 58, 60, beziehungsweise ein Blutloch, das als feste Drossel ausgeführt ist, mit einem Sumpf, beziehungsweise dem Tank T verbunden. Der Kolben 54 ist mit einer Kupplung C1 und der Kolben 56 mit einer Kupplung C2 gekoppelt.

Gemäß Figur 1 und 2 ist über die Kupplung C1 die Ausgangswelle 20 des Hydromotors 18 mit der Eingangswelle 21, die einen Eingang des Summierabschnitts 22 darstellt, verbindbar. Weiterhin ist die Eingangswelle 10 des mechanischen zweiten Leistungszweigs 14 über die Kupplung C2 mit einer Eingangswelle 11 des Summierabschnittes 22 verbindbar. Jedes der Wegeventile 38, 40 hat eine Versorgungsstellung (a), in der der Hochdruckanschluss mit dem Arbeitsanschluss A beziehungsweise B verbunden und der Tankanschluss T abgesperrt ist. Diese Versorgungsstellung (a) ist eine federvorgespannte Grundstellung. Weiterhin weist das Wegeventil 38, 40 eine Entlastungsstellung (b) auf, in der der Hochdruckanschluss P abgesperrt und der Arbeitsanschluss A beziehungsweise B mit dem Tankanschluss T verbunden ist.

Die zweite Arbeitsleitung 44 ist über eine Ventilanordnung 62 mit der ersten Arbeitsleitung 42 fluidisch verbindbar. Hierzu zweigt von der zweiten Arbeitsleitung 44 eine Druckmittelleitung 64 ab und mündet in die erste Arbeitsleitung 42. In der Druckmittelleitung 64 sind fluidisch in Reihe, ausgehend von der zweiten Arbeitsleitung 44 eine Drosselvorrichtung 66 und ein Rückschlagventil 68 angeordnet. Letztgenanntes weist eine von der zweiten Arbeitsleitung 44 hin zur ersten Arbeitsleitung 42 gerichtete Öffnungsrichtung auf und ist in entgegengesetzter Schließrichtung federvorgespannt. Dabei wird die Schließkraft des Rückschlagventils 68 von einer Schließfeder 70 bestimmt.

Die Schaltmatrix in Figur 2 rechts unten stellt die Betätigung der Kupplungen C1, C2 in Abhängigkeit von drei Fahrbereichen 1 bis 3 dar. In einem ersten Fahrbereich, der vom Stillstand der Achseinheit 26 bis hin zu einem ersten Übersetzungsverhältnis des Getriebes 2 reicht, ist nur die Kupplung C1 geschlossen und die Kupplung C2 ist gelöst. Folglich ist das Getriebe 2 in einem unverzweigten, hydrostatischen Fahrbereich betrieben. Ab dem ersten Übersetzungsverhältnis des Getriebes 2 wird dem hydrostatischen Leistungszweig 12 über die Kupplung C2 der mechanische Leistungszweig 14 zugeschaltet. In der Schaltmatrix ist dies an den beiden angekreuzten Feldern des Fahrbereichs 2 zu erkennen. Im Fahrbereich 2 liegt somit ein Leistungsverzweigter Fahrbetrieb vor. Dieser reicht bis zu einem zweiten Übersetzungsverhältnis, ab dem die Kupplung C1 gelöst wird. Oberhalb des zweiten Übersetzungsverhältnisses, im dritten Fahrbereich, erfolgt somit ein ausschließlich mechanischer Fahrbetrieb.

In diesem Fahrbetrieb ist somit die Kupplung C1 gemäß Figur 2 links oben gelöst, was dadurch erreicht wird, dass das Wegeventil 38 in seine Entlastungsstellung (b) geschaltet ist. Die erste Arbeitsleitung 42 ist somit druckentlastet. In diesem Zustand kann bei hinreichend langer Nichtbetätigung der Kupplung C1 Luft in die erste Arbeitsleitung 42 und die ihr zugeordnete, erste Stellvorrichtung 50 eindringen. Aus den vorbeschriebenen Gründen ist dies für einen exakten Schaltzeitpunkt und eine definierte Schaltkraft beim Übergang vom dritten zum zweiten Fahrbereich, bei dem die Kupplung C1 wieder zu betätigen ist, von Nachteil.

Um in die erste Arbeitsleitung 42 oder in den Arbeitsraum 46 eingedrungene Luft zu entfernen, oder um deren Eindringen überhaupt zu verhindern, weist die Steueranordnung des Getriebes 2 die Druckmittelleitung 64 und die Ventilanordnung 62 auf. Wie anhand der Schaltmatrix zu erkennen ist, ist im dritten Bereich lediglich die zweite Kupplung C2 betätigt, so dass die zweite Arbeitsleitung 44 Hochdruck führt. Über die Druckmittelleitung 64 steht dieser Druck am Rückschlagventil 68 an und öffnet dieses entgegen einem Druckäquivalent der Schließfeder 70, so dass ein Druckmittelbeziehungsweise Vorfüllvolumenstrom hin zur ersten Arbeitsleitung 42 ausbildbar ist. Da der Vorfüllvolumenstrom über die Drosselvorrichtung 66 strömen muss, wird er von dieser begrenzt. Über die Schließfeder 70 ist auf vorrichtungstechnisch einfache Weise der Vorfülldruck in der ersten Arbeitsleitung 42 und im Arbeitsraum 46 eingestellt. Ein Anteil des Vorfüllvolumenstroms durchströmt den Arbeitsraum 46 und strömt über die Leckagevorrichtung 58 zum Tank T, ein anderer strömt über die Entlastungsstellung (b) des Wegeventils 38 ebenfalls zum Tank T. Der Vorfülldruck liegt dabei ausreichend unterhalb des Betätigungsdruckes der ersten Kupplung C1, ab dem diese betätigt wird.

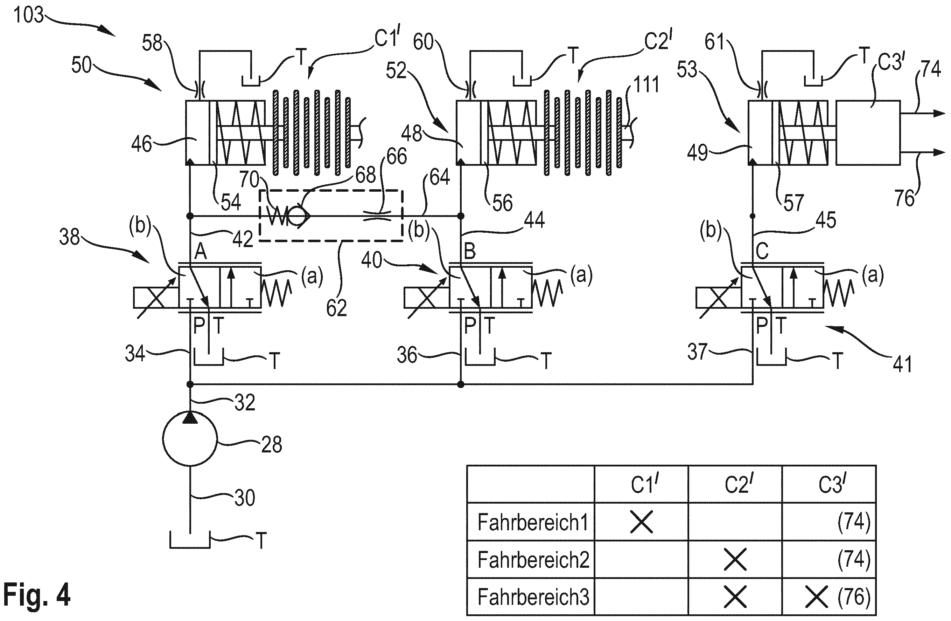

Figur 3 zeigt ein zweites Ausführungsbeispiel eines leistungsverzweigten Getriebes 102 eines Fahrantriebes 101. Zur Verkürzung der Beschreibung und zum Zwecke der Offenbarung sei an dieser Stelle auf die Offenlegungsschrift DE 10 2007 037 664 A1 verwiesen. Aus Gründen der Übersichtlichkeit sind in den nun folgenden Figuren 3 und 4 Bauteile oder Komponenten, die verglichen zum ersten Ausführungsbeispiel der Figuren 1 und 2 gleich ausgeführt sind oder gleiche Funktionalität aufweisen, mit gleichgebliebenem Bezugszeichen bezeichnet.

Auch das zweite Ausführungsbeispiel weist wieder einen hydraulischen, ersten Leistungszweig 112 auf, der im Wesentlichen dem des ersten Ausführungsbeispiels entspricht, jedoch in abweichender Weise an einen Summierabschnitt 122 des Getriebes 102 angebunden ist. Ähnliches gilt für einen mechanischen zweiten Leistungszweig 114. Beide sind über eine erste Kupplung C1' und eine zweite Kupplung C2' mit dem Summierabschnitt 122 verbindbar.

Ein weiterer Unterschied zum ersten Ausführungsbeispiel ist, dass dem Summierabschnitt 122 ein Schaltgetriebeabschnitt 72 mit einer ersten und einer zweiten Getriebestufe 74, 76 nachgeschaltet ist. Der Schaltgetriebeabschnitt 72 weist dabei eine dritte Kupplung beziehungsweise eine Synchronisationseinrichtung C3' auf, wobei bei unbetätigter Synchronisationseinrichtung C3' die erste Getriebestufe 74 mit der Ausgangswelle 24 des Getriebes 102 und bei betätigter Synchronisationseinrichtung C3' die zweite Getriebestufe 76 mit der Ausgangswelle 24 gekoppelt ist.

Figur 4 zeigt eine Steueranordnung 103 und ein mögliches Schaltschema beziehungsweise eine Schaltmatrix des zweiten Ausführungsbeispiels gemäß Figur 3. In einem ersten, rein hydraulischen Fahrbereich ist die erste Kupplung C1' geschlossen und die zweite Kupplung C2' ist gelöst. So ist über die zweite Kupplung C2' ein Steg des als Planetengetriebe ausgeführten Summierabschnitts 122 mit der Ausgangswelle 20 des Hydromotors 18 gekoppelt. Dieser Steg ist drehfest mit einer Abtriebswelle 121 des Summierabschnitts 122 verbunden. Gemäß der Schaltmatrix in Figur 4 ist die Synchronisationseinrichtung C3' zu diesem Zeitpunkt unbetätigt und die erste Getriebestufe 74 ist eingekoppelt. Oberhalb eines ersten Übersetzungsverhältnisses folgt ein zweiter, leistungsverzweigter Fahrbereich. Hierzu wird die erste Kupplung C1' gelöst und die zweite Kupplung C2' geschlossen. Dies erfolgt durch Betätigung der entsprechenden Wegeventil 38, 40, wobei das Wegeventil 38 in seine Entlastungsstellung (b) und das Wegeventil 40 in seine Versorgungsstellung (a) gestellt wird. Ab diesem Zeitpunkt erfolgt die Vorbefüllung der ersten Arbeitsleitung 42 über die Druckmittelleitung 64 und die Ventilanordnung 62, wie sie mit Bezug zur Figur 2 bereits beschrieben wurde. Auch zu diesem Zeitpunkt ist die Synchronisationseinrichtung C3' unbetätigt und die erste Getriebestufe 74 ist eingekoppelt.

Bei weiterer Beschleunigung in diesem leistungsverzweigten zweiten Fahrbereich wird beim Erreichen eines zweiten Übersetzungsverhältnisses in einen dritten Fahrbereich gewechselt, wozu die dritte Kupplung C3' betätigt wird, so dass die erste Getriebestufe 74 entkoppelt und die zweite Getriebestufe 76 eingekoppelt wird. Um dies zu ermöglichen, weicht die Steueranordnung 103 von derjenigen des ersten Ausführungsbeispiels gemäß Figur 2 mit der dritten Kupplung beziehungsweise Synchronisationseinrichtung C3' und den dafür benötigten hydraulischen Komponenten ab. Ansonsten entspricht sie vorrichtungstechnisch dem Ausführungsbeispiel gemäß Figur 2. Die Steueranordnung 103 weist eine dritte, von der Hochdruckleitung 32 abzweigende Zulaufleitung 37 auf, an die ein Hochdruckanschluss P eines baugleich mit den anderen Wegeventilen 38, 40 ausgeführtes Wegeventil 41 angeschlossen ist. Ein Arbeitsanschluss C des Wegeventils 41 ist dabei über eine dritte Arbeitsleitung 45 mit einer dritten, baugleich mit den anderen Stellvorrichtungen 50, 52 ausgeführten Stellvorrichtung 53, beziehungsweise mit deren Arbeitsraum 49 verbunden. Die dritte Stellvorrichtung 53 weist ebenso wie die anderen Stellvorrichtungen 50, 52 eine Leckagevorrichtung 61 auf, über die der Arbeitsraum 49 mit dem Sumpf beziehungsweise Tank T verbunden ist. Ein Kolben 57 der dritten Stellvorrichtung 53 ist mit der Synchronisationseinrichtung C3' gekoppelt.

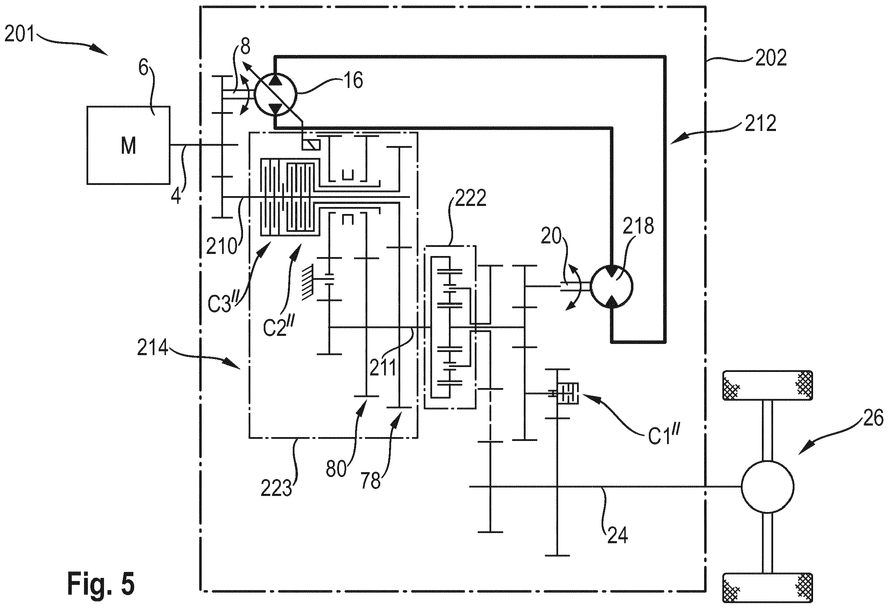

Figur 5 zeigt ein drittes Ausführungsbeispiel eines leistungsverzweigten Getriebes 202 eines Fahrantriebes 201. Das Getriebe 202 weist einen hydraulischen, ersten Leistungszweig 212 und einen mechanischen zweiten Leistungszweig 214 auf. Abweichend von den vorangegangenen Ausführungsbeispielen ist ein Hydromotor 218 des ersten Leistungszweigs 212 mit vorzugsweise konstantem Verdrängungsvolumen ausgestaltet. Die Leistungszweige 212 und 214 sind über einen Summierabschnitt 222 des Getriebes 202 koppelbar. Die Ausgangswelle 20 des Hydromotors 18 ist dabei stets mit dem Summierabschnitt 222 gekoppelt und über eine erste Kupplung C1" zusätzlich mit der Ausgangswelle 24 koppelbar.

Der mechanische Leistungszweig 214 des Getriebes 202 weist im gezeigten Ausführungsbeispiel einen Doppelkupplungsgetriebeabschnitt beziehungsweise Doppelkupplungsabschnitt 223 auf. Dieser ist eingangsseitig über eine Eingangswelle 210 permanent mit der Antriebsmaschine 6 gekoppelt. Ausgangsseitig ist eine Ausgangswelle 211 des Doppelkupplungsabschnitts 223 mit dem Summierabschnitt 222 gekoppelt. Der Summierabschnitt 222 weist somit zwei Eingänge auf, die einerseits permanent mit dem Hydromotor 218 und andererseits permanent mit der Ausgangswelle 211 des Doppelkupplungsabschnitts 223 verbunden sind. Um verschiedene Übersetzungen für zumindest zwei leistungsverzweigte Fahrbereiche realisieren zu können, sind im Doppelkupplungsabschnitt 223 zumindest eine erste Übersetzungsstufe 78 und eine zweite Übersetzungsstufe 80 vorgesehen. Beide 78, 80 sind permanent mit der Ausgangswelle 211 verbunden. Um die jeweils einzulegende Übersetzungsstufe 78, 80 mit der Eingangswelle 210 zu koppeln, ist eine zweite Kupplung C2" und eine dritte Kupplung C3" vorgesehen.

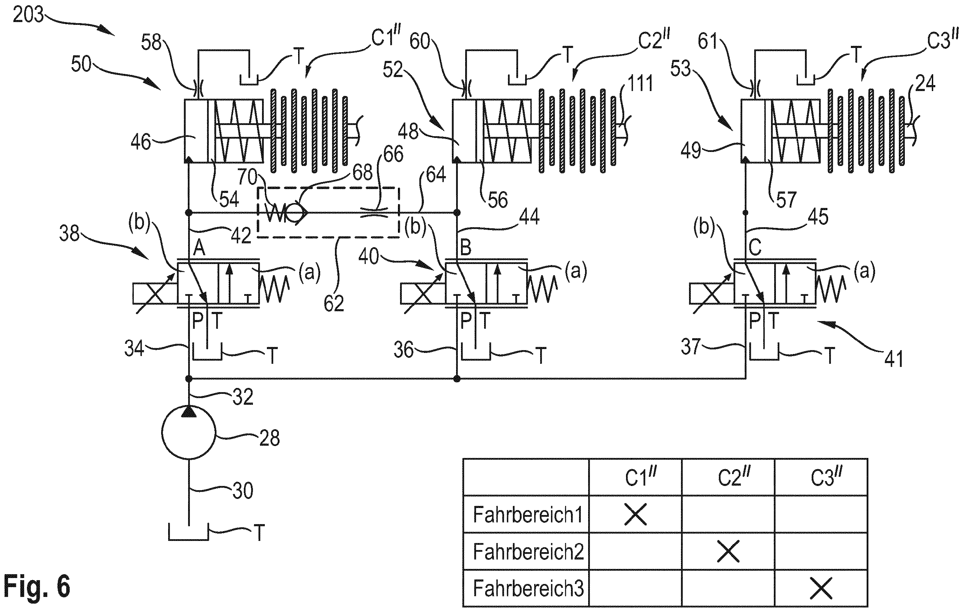

Figur 6 zeigt eine Steueranordnung 203 und ein mögliches Schaltschema beziehungsweise eine Schaltmatrix des dritten Ausführungsbeispiels gemäß Figur 5. Die Steueranordnung 203 weicht dabei von derjenigen gemäß Figur 4 lediglich im Bereich der dritten, als Lamellenkupplung ausgestalteten Kupplung C3" ab. Über die Kupplung C3" ist die Ausgangswelle 20 zusätzlich zum Kraftfluss über den Summierabschnitt 222 mit der Ausgangswelle 24 gemäß Figur 5 koppelbar. In einem ersten, rein hydraulischen Fahrbereich ist die erste Kupplung C1" geschlossen und die beiden anderen Kupplungen C2" und C3" sind geöffnet. Entsprechend ist die erste Stellvorrichtung 50 über das erste Wegeventil 38 betätigt und die anderen Stellvorrichtungen 52, 53 sind unbetätigt, wobei deren Arbeitsräume 48, 49 und - leitungen 44, 45 zum Tank hin entlastet sind. Ein Wechsel in einen zweiten, leistungsverzweigten Fahrbereich erfolgt, wenn bei annähernd maximaler Übersetzung des hydrostatischen Leistungszweigs 212, was einem eingestellten maximalen Verdrängungsvolumen der Hydropumpe 16 entspricht, eine Synchronbedingung des Doppelkupplungsabschnitts 223 erfüllt ist. Der Wechsel erfolgt durch ein Öffnen der ersten Kupplung C1" und ein gleichzeitiges Schließen der zweiten Kupplung C2" des Doppelkupplungsabschnitts 223 durch die entsprechende Druckentlastung der ersten Stellvorrichtung 50 und Betätigung der Stellvorrichtung 52. Die Hydropumpe 16 ist, wie bereits in den vorherigen Ausführungsbeispielen, vorzugsweise über ihre Nulllage hinaus verschwenkbar, so dass zur weiteren Beschleunigung bei Erreichen ihrer Neutralstellung beziehungsweise Nulllage eine Drehrichtungsumkehr des Hydromotors 218 bewirkt wird. Die Hydropumpe 16 wird nach überschreiten der Nulllage weiter in Richtung maximalen Fördervolumens in der zweiten Förderrichtung verstellt. Beim Erreichen ihrer maximalen Fördermenge wird ein asynchroner Schaltpunkt zum Wechseln vom zweiten in den dritten Fahrbereich erreicht. Die erste Kupplung C1 " bleibt bei diesem Wechsel weiterhin geöffnet und es wird die zweite Kupplung C2" geöffnet und gleichzeitig die dritte Kupplung C3" des Doppelkupplungsabschnitts 223 geschlossen. Demgemäß sind die Stellvorrichtungen 50, 52 unbetätigt und die dritte Stellvorrichtung ist betätigt.

Im dritten Ausführungsbeispiel wird im hochtourigen dritten Fahrbereich die erfindungsgemäße Vorbefüllung der ersten Arbeitsleitung 42 und der ersten Stellvorrichtung 50 durch eine geeignet ausgestaltete Ventilanordnung (nicht dargestellt) unterbrochen, so dass sich die erste Arbeitsleitung 42 und der zugehörige Arbeitsraum 46 entleert. Hintergrund hierfür ist, dass auf diese Weise ein selbsttätiges, unerwünschtes Schließen der ersten Kupplung C1" aufgrund von aus der Rotation des Kolbens 54 resultierenden Zentrifugalkräften und der damit verbundenen Druckerhöhung im Arbeitsraum 46 verhindert wird.

Die letztgenannte Entleerung der ersten Arbeitsleitung und des ersten Arbeitsraumes im hochtourigen dritten Fahrbereich ist nicht auf das dritte Ausführungsbeispiel beschränkt, sondern kann bei allen Ausführungsbeispielen vorteilhaft zur Anwendung kommen. Des Weiteren ist eine Entleerung der zweiten Arbeitsleitung und des zweiten Arbeitsraumes im dritten, hochtourigen Fahrbereich für alle Ausführungsbeispiele vorteilhaft und kann dort zur Anwendung kommen.

Für alle Ausführungsbeispiele gilt, dass für Wechsel der Fahrbereiche in entgegengesetzter Richtung, die Betätigungen und Öffnungen der Kupplungen entsprechend in umgekehrter Reihenfolge durchlaufen werden.

Für alle Ausführungsbeispiele gilt, dass beim Wechsel in einen Fahrbereich, der das Schließen der ersten Kupplung C1; C1'; C1" erfordert, die über die erfindungsgemäße Ventilanordnung 62 vorbefüllte erste Arbeitsleitung 42 und erste Stellvorrichtung 50 in einem präzisen Schaltzeitpunkt und einem definierten Schaltkraftverlauf resultiert.

Die Kupplung C1, C2; C1', C2'; C1", C2", C3" ist vorzugsweise als eine Lamellenkupplung ausgebildet.

Offenbart ist eine hydraulische Steueranordnung, die zur Betätigung von Kupplungen eines leistungsverzweigten Getriebes in Abhängigkeit von Fahrbereichen des Getriebes oder zur Ausbildung dieser Fahrbereiche vorgesehen ist. Dabei weist die Steueranordnung für die Kupplungen jeweils eine mit einer Druckmittelsenke fluidisch verbindbare hydraulische Stellvorrichtung auf. Von dieser ist eine erste über eine erste Arbeitsleitung und eine zweite über eine zweite Arbeitsleitung, jeweils zur Betätigung der ihr zugeordneten Kupplung, mit einer Druckmittelquelle verbindbar, wobei die Steueranordnung zusätzlich eine Ventilanordnung aufweist, über die beide Arbeitsleitungen miteinander in eine gedrosselte Druckmittelverbindung bringbar sind.

Weiterhin sind offenbart ein leistungsverzeigtes Getriebe mit einer derartigen Steueranordnung und ein Verfahren zur Vorbefüllung von wenigstens der ersten Arbeitsleitung der Steueranordnung.

### Bezugszeichenliste

- 1; 101; 201: Fahrantrieb
- 2; 102; 202: Getriebe
- 3; 103; 203: Steueranordnung
- 4: Eingangswelle
- 6: Antriebsmaschine
- 8, 10, 11; 110, 111: Eingangswelle
- 12; 112; 212: hydraulischer Leistungszweig
- 14; 114, 214: mechanischer Leistungszweig
- 16: Hydropumpe
- 18; 218: Hydromotor
- 20: Ausgangswelle
- 21: Eingangswelle
- 22; 122: Summierabschnitt
- 223: Doppelkupplungsabschnitt
- 24: Ausgangswelle
- 26: Achseinheit
- 28: Hydropumpe
- 30: Niederdruckleitung
- 32: Hochdruckleitung
- 34, 36; 37: Zulaufleitung
- 38, 40; 41: Wegeventil
- 42: erste Arbeitsleitung
- 44: zweite Arbeitsleitung
- 45: dritte Arbeitsleitung
- 46, 48 ; 49: Arbeitsraum
- 50: erste Stellvorrichtung
- 52: zweite Stellvorrichtung
- 53: dritte Stellvorrichtung
- 54, 56; 57: Kolben
- 58, 60; 61: Leckagevorrichtung
- 62: Ventilanordnung
- 64: Druckmittelleitung
- 66: Drosselvorrichtung
- 68: Rückschlagventil
- 70: Schließfeder
- 72: Schaltgetriebeabschnitt
- 74: erste Getriebestufe
- 76: zweite Getriebestufe
- 121: Abtriebswelle

- C1; C1'; C1": erste Kupplung
- C2; C2'; C2": zweite Kupplung
- C3'; C3": dritte Kupplung

## Patentansprüche

1. Hydraulische Steueranordnung zur Betätigung von Kupplungen (C1, C2; C1', C2', C3'; C1", C2", C3") eines leistungsverzweigten Getriebes (2; 102; 202) in Abhängigkeit von Fahrbereichen des Getriebes (2; 102; 202), wobei die Steueranordnung (3; 103; 203) für jede der Kupplungen (C1, C2; C1', C2', C3'; C1", C2", C3") jeweils eine mit einer Druckmittelsenke (T) fluidisch verbindbare, hydraulische Stellvorrichtung (50, 52; 50, 52, 53) aufweist, und wobei eine erste (50) der Stellvorrichtungen (50, 52; 50, 52, 53) über eine erste Arbeitsleitung (42) und eine zweite (52) der Stellvorrichtungen (50, 52; 50, 52, 53) über eine zweite Arbeitsleitung (44), jeweils zur Betätigung der ihr zugeordneten Kupplung (C1, C2; C1', C2'; C1", C2"), mit einer Druckmittelquelle (28) verbindbar ist, und mit einer Ventilanordnung (62), über die die erste Arbeitsleitung (42) und die zweite Arbeitsleitung (44) miteinander in eine gedrosselte Druckmittelverbindung bringbar sind, **dadurch gekennzeichnet, dass** die Ventilanordnung (62) eine mit der zweiten Arbeitsleitung (44) fluidisch verbindbare Drosselvorrichtung (66) und ein mit dieser fluidisch in Reihe geschaltetes, mit der ersten Arbeitsleitung (42) fluidisch verbindbares Rückschlagventil (68) aufweist, das in seiner Öffnungsrichtung mit einem Druck zwischen der Drosselvorrichtung (66) und dem Rückschlagventil (68) beaufschlagbar ist, wobei über eine aus einem Druckäquivalent einer Schließfeder (70) des Rückschlagventils (68) resultierenden Schließkraft des Rückschlagventils (68) ein Druck in der ersten Arbeitsleitung (42) einstellbar ist, oder **dass** die Ventilanordnung eine fluidisch zwischen die erste und die zweite Arbeitsleitung fluidisch in Reihe geschaltete, mit beiden Arbeitsleitungen fluidisch verbindbare, stetig verstellbare Steuerdrossel aufweist, deren Öffnungsquerschnitt in Abhängigkeit eines Soll- und eines Istwertes eines Vorfülldrucks der ersten und / oder zweiten Arbeitsleitung steuerbar ist.

2. Steueranordnung nach Patentanspruch 1, wobei wenigstens eine der Stellvorrichtungen (50, 52; 50, 52, 53) eine Leckagevorrichtung (58, 60; 61) aufweist, über die sie fluidisch mit der Druckmittelsenke (T) verbindbar ist.

3. Steueranordnung nach einem der vorhergehenden Patentansprüche, die für eine weitere (C3'; C3") der Kupplungen (C1, C2; C1', C2', C3'; C1", C2", C3") eine fluidisch mit der Druckmittelsenke (T) verbindbare dritte Stellvorrichtung (53) aufweist, die über eine dritte Arbeitsleitung (45) zur Betätigung der ihr zugeordneten Kupplung (C3'; C3") fluidisch mit der Druckmittelquelle (28) verbindbar ist.

4. Steueranordnung nach einem der vorhergehenden Patentansprüche, wobei wenigstens eine der Stellvorrichtungen (50, 52; 53) über die ihr zugeordnete Arbeitsleitung (42, 44; 45) fluidisch mit der Druckmittelsenke (T) verbindbar ist.

5. Steueranordnung nach einem der vorhergehenden Patentansprüche, wobei wenigstens eine der Arbeitsleitungen (42, 44; 45) mit einem Arbeitsanschluss (A, B; C) eines ihr zugeordneten Wegeventils (38, 40; 41) verbunden ist, das einen mit der Druckmittelquelle (28) verbindbaren Hochdruckanschluss (P) und einen mit der Druckmittelsenke (T) verbindbaren Niederdruckanschluss (T) hat, und das eine Versorgungsstellung (a), über die der Hochdruckanschluss (P) mit dem Arbeitsanschluss (A, B; C) verbindbar ist, und eine Entlastungsstellung (b), über die der Niederdruckanschluss (T) mit dem Arbeitsanschluss (A, B; C) verbindbar ist, hat.

6. Steueranordnung nach einem der vorhergehenden Patentansprüche, wobei wenigstens eine der Stellvorrichtungen (50, 52; 53) über einen Hydrozylinder mit einem Arbeitsraum (46, 48; 49) ausgebildet ist, der mit der Arbeitsleitung (42, 44; 45) dieser Stellvorrichtung (50, 52; 53) fluidisch verbindbar ist, und der zumindest abschnittsweise von einem axial verschieblichen Kolben (54, 56; 57) begrenzt ist, wobei der Kolben (54, 56; 57) für eine Kopplung mit der der Stellvorrichtung (50, 52; 53) zugeordneten Kupplung (C1, C2; C1', C2', C3'; C1", C2", C3") vorgesehen ist.

7. Leistungsverzweigtes Getriebe mit mehreren Fahrbereichen, und mit einem hydraulischen, ersten Leistungszweig (12; 112; 212) und einem mechanischen, zweiten Leistungszweig (14; 114; 214), und mit einer hydraulischen Steueranordnung (3; 103; 203), die gemäß einem der vorhergehenden Patentansprüche ausgestaltet ist, wobei deren erste Stellvorrichtung (50) mit einer ersten Kupplung (C1; C1'; C1") des Getriebes (2; 102; 202) gekoppelt ist, über die einer (12; 112; 212) der beiden Leistungszweige (12, 14; 112, 114; 212, 214) mit einem Getriebeausgang (24) koppelbar ist, und wobei deren zweite Stellvorrichtung (52) mit einer zweiten Kupplung (C2; C2'; C2") gekoppelt ist, über die der andere (14; 114; 214) der beiden Leistungszweige (12, 14; 112, 114; 212, 214) mit dem Getriebeausgang (24) koppelbar ist.

8. Verfahren zur Vorbefüllung der ersten Arbeitsleitung (42) einer Steueranordnung (3; 103; 203) eines Getriebes (2; 102; 202), das gemäß Patentanspruch 7 ausgestaltet ist, **gekennzeichnet durch** einen Schritt
Gedrosseltes Verbinden der zweiten Arbeitsleitung (44) mit der ersten Arbeitsleitung (42) über die Ventilanordnung (62) in Abhängigkeit eines Fahrbereichs des Getriebes (2; 102; 202).

## Claims

1. Hydraulic control arrangement for actuating clutches (C1, C2; C1', C2', C3'; C1", C2", C3") of a power-split transmission (2; 102; 202) as a function of drive ranges of the transmission (2; 102; 202), wherein the control arrangement (3; 103; 203) has, for each of the clutches (C1, C2; C1', C2', C3'; C1", C2", C3"), in each case one hydraulic actuating device (50, 52; 50, 52, 53) which can be fluidically connected to a pressure medium sink (T), and wherein a first (50) of the actuating devices (50, 52; 50, 52, 53) can be connected via a first working line (42), and a second (52) of the actuating devices (50, 52; 50, 52, 53) can be connected via a second working line (44), in each case for the actuation of the clutch (C1, C2; C1', C2'; C1", C2") associated therewith, to a pressure medium source (28), and having a valve arrangement (62) by means of which the first working line (42) and the second working line (44) can be placed in throttled pressure medium connection with one another, **characterized in that** the valve arrangement (62) has a throttle device (66), which can be fluidically connected to the second working line (44), and a check valve (68), which is connected fluidically in series with said throttle device and which can be fluidically connected to the first working line (42) and which can be acted on in its opening direction by a pressure between the throttle device (66) and the check valve (68), wherein a pressure in the first working line (42) can be set by means of a closing force of the check valve (68) which results from a pressure equivalent of a closing spring (70) of the check valve (68), or **in that** the valve arrangement has a continuously adjustable control throttle which is connected fluidically in series between the first and the second working line and which is fluidically connectable to both working lines and the opening cross section of which can be controlled as a function of a setpoint and an actual value of a prefill pressure of the first and/or second working line.

2. Control arrangement according to Patent Claim 1, wherein at least one of the actuating devices (50, 52; 50, 52, 53) has a leakage device (58, 60; 61) by means of which it can be fluidically connected to the pressure medium sink (T).

3. Control arrangement according to one of the preceding patent claims, which has, for a further one (C3'; C3") of the clutches (C1, C2; C1', C2', C3'; C1", C2", C3"), a third actuating device (53) which can be fluidically connected to the pressure medium sink (T) and which can be fluidically connected via a third working line (45), for the actuation of the clutch (C3'; C3") associated therewith, to the pressure medium source (28).

4. Control arrangement according to one of the preceding patent claims, wherein at least one of the actuating devices (50, 52; 53) can be fluidically connected, via the working line (42, 44; 45) associated therewith, to the pressure medium sink (T).

5. Control arrangement according to one of the preceding patent claims, wherein at least one of the working lines (42, 44; 45) is connected to a working port (A, B; C) of a directional valve (38, 40; 41) associated therewith, which directional valve has a high-pressure port (P) connectable to the pressure medium source (28) and a low-pressure port (T) connectable to the pressure medium sink (T), and which directional valve has a supply position (a), by means of which the high-pressure port (P) can be connected to the working port (A, B; C), and a relief position (b), by means of which the low-pressure port (T) can be connected to the working port (A, B; C).

6. Control arrangement according to one of the preceding patent claims, wherein at least one of the actuating devices (50, 52; 53) is formed by a hydraulic cylinder with a working chamber (46, 48; 49) which can be fluidically connected to the working line (42, 44; 45) of said actuating device (50, 52; 53) and which is delimited at least in sections by an axially displaceable piston (54, 56; 57), wherein the piston (54, 56; 57) is provided for coupling to the clutch (C1, C2; C1', C2', C3'; C1", C2", C3") associated with the actuating device (50, 52; 53).

7. Power-split transmission having a plurality of drive ranges, having a hydraulic first power branch (12; 112; 212) and a mechanical second power branch (14; 114; 214), and having a hydraulic control arrangement (3; 103; 203) designed according to one of the preceding patent claims, wherein the first actuating device (50) of said hydraulic control arrangement is coupled to a first clutch (C1; C1'; C1") of the transmission (2; 102; 202), by means of which first clutch one (12; 112; 212) of the two power branches (12, 14; 112, 114; 212, 214) can be coupled to a transmission output (24), and wherein the second actuating device (52) of said hydraulic control arrangement is coupled to a second clutch (C2; C2'; C2"), by means of which the other (14; 114; 214) of the two power branches (12, 14; 112, 114; 212, 214) can be coupled to the transmission output (24).

8. Method for the prefilling of the first working line (42) of a control arrangement (3; 103; 203) of a transmission (2; 102; 202) designed according to Patent Claim 7, **characterized by** a step:
throttled connection of the second working line (44) to the first working line (42) by means of the valve arrangement (62) as a function of a drive range of the transmission (2; 102; 202).

## Revendications

1. Dispositif de commande hydraulique destiné à actionner des embrayages (C1, C2 ; C1', C2', C3' ; C1", C2", C3") d'une transmission à répartition de puissance (2, 102, 202) en fonction de gammes de puissance de la transmission (2 ; 102 ; 202), le dispositif de commande (3 ; 103 ; 203) comportant pour chacun des embrayages (C1, C2 ; C1', C2' C3' ; C1", C2", C3") un dispositif de réglage hydraulique (50, 52 ; 50, 52, 53) pouvant être relié de manière fluidique à un collecteur de fluide sous pression (T), et un premier (50) des dispositifs de réglage (50, 52 ; 50, 52, 53) peut être relié par une première conduite de travail (42), et un deuxième (52) des dispositifs de réglage (50, 52 ; 50, 52, 53) par une deuxième conduite de travail (44), à une source d'agent sous pression (28) et à un dispositif de soupape (62), permettant de réunir la première conduite de travail (42) et la deuxième conduite de travail (44) en une liaison de fluide sous pression étranglée, pour actionner l'embrayage (C1, C2 ; C1', C2', C1", C2") qui lui est associé, **caractérisé en ce que** l'ensemble formant soupape (62) comporte un dispositif d'étranglement (66), pouvant être relié de manière fluidique à la deuxième conduite de travail (44), et une soupape de retenue (68) montée de manière fluidique en série avec le dispositif d'étranglement et pouvant être reliée de manière fluide à la première conduite de travail (42), laquelle soupape de retenue peut être soumise dans son sens d'ouverture à une pression entre le dispositif d'étranglement (66) et la soupape de retenue (68), une pression dans la première conduite de travail (42) pouvant être réglée par la force de fermeture de la soupape de retenue (68) qui résulte d'un équivalent de pression d'un ressort de fermeture (70) de la soupape de retenue (68), ou **en ce que** l'ensemble formant soupape est un étranglement de commande réglable en continu qui est monté en série de manière fluidique entre les première et deuxième conduites de travail, qui peut être relié de manière fluidique aux deux conduites de travail et dont la section d'ouverture peut être commandée en fonction d'une valeur de consigne et d'une valeur réelle d'une pression de pré-charge de la première et/ou deuxième conduite de travail.

2. Dispositif de commande selon la revendication 1, l'un au moins des dispositifs de réglage (50, 52 ; 50, 52, 53) comporte un dispositif de fuite (58, 60 ; 61) permettant de relier celui-ci de manière fluidique au collecteur d'agent sous pression (T).

3. Dispositif de commande selon l'une des revendications précédentes, lequel comporte pour un autre (C3' ; C3") des embrayages (C1, C2 ; C1', C2', C3' ; C1", C2", C3") un troisième dispositif de réglage (53) qui peut être relié de manière fluidique au collecteur d'agent sous pression (T) et qui peut être relié de manière fluidique à la source d'agent sous pression (28) par le biais d'une troisième conduite de travail (45) pour actionner l'embrayage (C3', C3") qui lui est associé.

4. Dispositif de commande selon l'une des revendications précédentes, l'un au moins des dispositifs de réglage (50, 52 ; 53) pouvant être relié de manière fluidique au collecteur d'agent sous pression (T) par le biais de la conduite de travail (42, 44 ; 45) qui lui est associée.

5. Dispositif de commande selon l'une des revendications précédentes, l'une au moins des conduites de travail (42, 44, 45) étant reliée à un raccord de travail (A, B ; C) d'un distributeur (38, 40 ; 41) qui lui est associé, lequel distributeur comporte un raccord à haute pression (P) pouvant être relié à la source d'agent sous pression (28) et un raccord à basse pression (T) pouvant être relié au collecteur d'agent sous pression (T) et présente une position d'alimentation (a) permettant de relier le raccord à haute pression (P) au raccord de travail (A, B ; C) et une position d'évacuation (b) permettant de relier le raccord à basse pression (T) au raccord de travail (A, B ; C).

6. Dispositif de commande selon l'une des revendications précédentes, l'un au moins des dispositifs de réglage (50, 52 ; 53) étant formé par un cylindre hydraulique pourvu d'un espace de travail (46, 48 ; 49) qui peut être relié de manière fluidique à la conduite de travail (42, 44 ; 45) de ce dispositif de réglage (50, 52 ; 53) et qui est délimité au moins en partie par un piston (54, 56 ; 57) pouvant être déplacé axialement, ledit piston (54, 56 ; 57) étant prévu pour être couplé à l'embrayage (C1, C2 ; C1', C2', C3' ; C1", C2", C3") associé au dispositif de réglage (50, 52 ; 53).

7. Transmission à répartition de puissance comportant plusieurs gammes de puissance et comprenant une première branche de puissance hydraulique (12 ; 112 ; 212) et une deuxième branche de puissance mécanique (14 ; 114 ; 214) et un dispositif de commande hydraulique (3 ; 103 ; 203) conçu selon l'une des revendications précédentes, leur premier dispositif de réglage (50) étant accouplé à un premier embrayage (C1 ; C1'; C1") de la transmission (2 ; 102 ; 202) permettant d'accoupler l'une (12 ; 112 ; 212) des deux branches de puissance (12, 14 ; 112, 114 ; 212, 214) à une sortie de transmission (24), et le deuxième dispositif de réglage (52) étant accouplé à un deuxième embrayage (C2 ; C2' ; C2") permettant d'accoupler l'autre (14 ; 114 ; 214) des deux branches de puissance (12, 14 ; 112, 114 ; 212, 214) à la sortie de transmission (24).

8. Procédé de pré-remplissage de la première conduite de travail (42) d'un dispositif de commande (3 ; 103 ; 203) d'une transmission (2 ; 102 ; 202) conçue selon la revendication 7, **caractérisé par** une étape suivante :
relier de manière étranglée la deuxième conduite de travail (44) à la première conduite de travail (42) par le biais l'ensemble formant soupape (62) en fonction d'une gamme de puissance de la transmission (2 ; 102 ; 202).
